# EUROPEAN PATENT APPLICATION

(11) **EP 3 620 619 A1**
(43) Date of publication of application: **11.03.2020**
(21) Application number: 19196405.5
(22) Date of filing: 10.09.2019
(51) Int. Cl.: F01D 25/16, B33Y 80/00

(54) **TURBINE EXHAUST STRUCTURE FOR A GAS TURBINE ENGINE**

(30) Priority: 10.09.2018 US 201816126473
(71) Applicant: Pratt & Whitney Canada Corp., Longueuil, Québec J4G 1A1 (CA)
(72) Inventor: DUROCHER, Eric, (01BE5) Longueuil, Québec J4G 1A1 (CA); MACFARLANE, Ian A, (01BE5) Longueuil, Québec J4G 1A1 (CA); PIETROBON, John, (01BE5) Longueuil, Québec J4G 1A1 (CA); HO, Eric, (01BE5) Longueuil, Québec J4G 1A1 (CA); ZEINALOV, Jamal, (01BE5) Longueuil, Québec J4G 1A1 (CA)
(74) Representative: Dehns

(57) **Abstract**

The turbine exhaust structure (25) for a gas turbine engine (10) includes a turbine exhaust duct (28) and a bearing housing (33). The turbine exhaust duct includes annular inner and outer case portions (27, 29) radially spaced apart to define an annular gas path (32) therebetween and a plurality of struts (31) extending between and structurally interconnecting the inner and outer case portions (27, 29). The struts (31) are circumferentially spaced apart about within the annular gas path (32). The bearing housing (33) is disposed within the inner case portion (27) of the turbine exhaust duct (28). A plurality of structural ribs (40) extend between the bearing housing (33) and the inner annular case portion (27). The structural ribs (40) are circumferentially spaced from one another and are circumferentially offset from the struts (31). A corresponding fabricating method is also provided.

## Description

### TECHNICAL FIELD

The present disclosure relates generally to gas turbine engines and, more particularly, to turbine cases.

### BACKGROUND

Turbine exhaust structures, sometimes called turbine exhaust cases, may be structural components of the engine, wherein they are load bearing in addition to providing aerodynamic functions. Structural turbine exhaust cases support a bearing housing and a bearing for a main spool (e.g. a low pressure spool, including the shaft and rotary components mounted thereto) of the engine. However, in seeking to provide a turbine exhaust structure having desired levels of strength and/or stiffness for airborne gas turbine engines, the potential negative weight impact of making a very strong and/or stiff turbine exhaust structure must be carefully considered by the designer.

Therefore, there remains a need for an improved turbine exhaust case structure for a gas turbine engine.

### SUMMARY OF THE INVENTION

There is accordingly provided a turbine exhaust structure for a gas turbine engine, comprising: a turbine exhaust duct having annular inner and outer case portions radially spaced apart to define an annular gas path therebetween, a plurality of struts extending between and structurally interconnecting the inner and outer case portions, the struts being circumferentially spaced apart about within the annular gas path, a strut axis extending through each of the struts between a radially inner end and a radially outer end thereof; and a bearing housing disposed within the inner case portion of the turbine exhaust duct, the bearing housing adapted to support a main shaft bearing of the gas turbine engine, a plurality of structural ribs extending between the bearing housing and the inner annular case portion, the structural ribs configured to structurally interconnect and transfer load between the bearing housing and the inner case portion of the turbine exhaust duct, the structural ribs circumferentially spaced from one another and circumferentially offset from the struts.

The turbine exhaust structure as defined above and herein may also include, in whole or in part and in any combination, one or more of the following features:
the struts and the strut axes are axially inclined to define an axial offset between the radially inner ends and the radially outer ends of the struts;
the radially outer ends of the struts are disposed axially forward of the radially inner ends thereof, and the struts extend axially rearwardly as they extend radially inwardly from the outer ends towards the inner ends thereof, and optionally wherein the structural ribs are axially aligned with the strut axes;
outer case ribs disposed outwardly of the turbine exhaust duct, the outer case ribs being circumferentially spaced apart and extending radially away from the outer case portion, the outer case ribs being optionally circumferentially and/or axially aligned with the strut axes.
the structural ribs extend radially between the bearing housing and the inner annular case portion.
the structural ribs are equally circumferentially spaced apart;
the number of structural ribs is equal to the number of struts;
one of the structural ribs is disposed circumferentially between each pair of the struts, and optionally wherein said one of the structural ribs is disposed a circumferential mid-point between each said pair of the struts;
the struts have a cross-sectional perimeter that is airfoil-shaped;
the turbine exhaust structure has stiffness to weight ratio of greater than 15000 Ibf/in (2627 N/mm) per 1 lb (0.454 kg) of material; and/or
the bearing housing and the turbine exhaust duct are integrally formed as a single monolithic component, the turbine exhaust structure being optionally composed of a single material throughout, the single material being an additive manufactured material.

There is also provided a method of fabricating a turbine exhaust structure of a gas turbine engine, the method comprising: integrally forming a turbine exhaust duct and a bearing housing as a single monolithic component, the turbine exhaust ducting including having annular inner and outer case portions and a plurality of struts extending between and structurally interconnecting the inner and outer case portions, the struts circumferentially spaced from one another and each defining a strut axis extending therethrough between a radially inner end and a radially outer end of the struts, the bearing housing disposed within the inner case portion of the turbine exhaust duct; and forming a plurality of structural ribs integrally with the bearing housing and the turbine exhaust duct, the structural ribs extending radially between the bearing housing and the inner case portion, the structural ribs being circumferentially spaced apart from each other, the structural ribs being axially aligned with the struts of the turbine exhaust duct.

The method as defined above and herein may also include, in whole or in part and in any combination, one or more of the following steps/elements:
forming the struts and the structural ribs to be axially inclined, such that each of the struts and the structural ribs define an axial offset between radially inner ends and radial outer ends thereof;
circumferentially offsetting the structural ribs from the struts; and/or
providing a common number of each of the struts and the structural ribs.

### BRIEF DESCRIPTION OF THE DRAWINGS

Reference is now made to the accompanying figures in which:
Fig. 1 is a schematic cross-sectional view of a gas turbine engine;
Fig. 2 is a rear perspective view of a turbine exhaust structure of the gas turbine engine of Fig. 1, in accordance with an embodiment of the present disclosure;
Fig. 3 is a front elevation view of the turbine exhaust structure of Fig. 2;
Fig. 4 is a detailed front elevation view of the turbine exhaust structure of Fig. 2, taken from region 4 in Fig. 3;
Fig. 5 is a partial cross-sectional view of the turbine exhaust structure of Fig. 2; and
Fig. 6 is another cross-sectional view of the turbine exhaust structure of Fig. 2.

### DETAILED DESCRIPTION

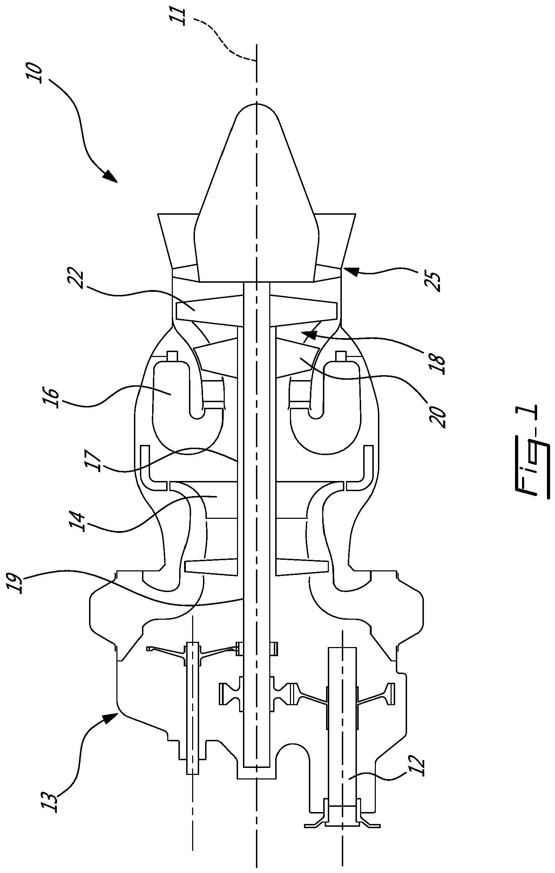

Fig. 1 illustrates a gas turbine engine 10 of a type preferably provided for use in subsonic flight, generally comprising in serial flow communication a compressor section 14 for pressurizing the air, a combustor 16 in which the compressed air is mixed with fuel and ignited for generating an annular stream of hot combustion gases, and a turbine section 18 for extracting energy from the combustion gases. A main engine axis 11 extends longitudinally through the center of the gas turbine engine 10.

In the depicted embodiment, the gas turbine engine 10 is a turboshaft engine and the turbine section 18 thereof includes a high pressure turbine 20, which drives the compressors 14 via a high pressure (HP) shaft 17, and a low pressure (LP) turbine 22 (sometimes called the power turbine 22) which provides power output to the reduction gearbox 13 via a low pressure shaft 19 for driving a power output shaft 12 of the engine.

Although the gas turbine engine 10 as depicted in Fig. 1 is a turboshaft engine, it is to be understood that the turbine exhaust structure as described herein may be used with various types of gas turbine engines, including turbofans, turboprops, and turboshafts.

At the aft end of the engine 10, the gas turbine engine 10 further includes a turbine exhaust structure 25 located at the exit of the turbine section 18, immediately downstream therefrom. The turbine exhaust structure 25 directs the hot core exhaust gases exiting from the turbine section 18 further downstream, to exit the engine. The turbine exhaust structure 25 of the present disclosure may also be referred to herein as a turbine exhaust case (sometimes abbreviated TEC), given that these terms are often used by those skilled in the art when referring to this component of a gas turbine engine. It is however to be understood that regardless of the terminology used, all relate to the structure located downstream of the turbine section 18 of the engine, through which passes the hot exhaust gasses from the core of the engine 10.

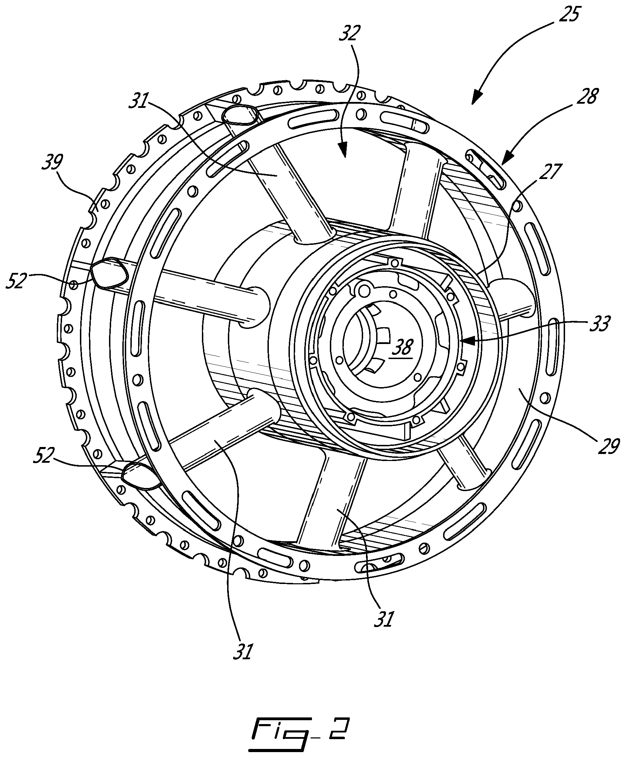

As will also be seen in further detail below, with reference to Figs. 2-3 for example, the turbine exhaust case 25 includes generally an outer turbine exhaust duct 28 and an inner bearing compartment 33. As noted below, in one particular embodiment, the turbine exhaust duct 28 and the bearing compartment are integrally formed with each other to form a monolithic structure of the turbine exhaust structure 25.

The outer turbine exhaust duct 28 includes an annular inner case portion 27, an annular outer case portion 29 that is spaced radially outward from the inner case portion 27, and a plurality of airfoil-shaped struts 31 radially extending between the inner and outer case portions 27, 29, thereby structurally connecting same. The airfoil-shaped struts 31 (hereinafter simply "struts" or "airfoils") therefore extend through the hot annular gas path, and are sometimes referred to as "hot struts" by those skilled in the art. The struts 31 are circumferentially spaced apart about the annular passage 32 defined between the inner and outer case portions 27 and 29, through which the hot core exhaust gasses exiting the turbine section 18 of the engine flow. The airfoil-shaped struts 31 may be substantially hollow.

As described in further detail below, in one particular embodiment the turbine exhaust duct 28 and the bearing housing 33 of the turbine exhaust structure 25 are integrally formed as a single, monolithic structure, whether by additive manufacturing or more conventional manufacturing methods, including machining, casing, molding, etc. However, it is also possible for the various components of turbine exhaust structure 25 to be formed separately and then assembled. In this embodiment, the airfoil-shaped struts 31 may be made of sheet metal, and the inner and outer case portions 27, 29 may be formed for example by machining, forging, casting, etc.

During operation of the gas turbine engine 10, combustion gases discharged from the combustor 16 power the high and low pressure turbines 20 and 22, and are then exhausted through the annular gas path 32 defined between the inner and outer case portions 27, 29 of the turbine exhaust case 25. The tangential flow components included in the exhaust gases are de-swirled by the airfoils 31 of the turbine exhaust case 25, and then the exhaust gases are discharged downstream into the atmosphere.

In the depicted embodiment, the turbine exhaust structure 25 is load bearing, in that it supports a bearing housing 33 therein within which a bearing for a main spool of the engine (such as the low pressure spool, which may include the LP shaft 19, including the shaft and the rotary components - e.g. the rotors of the compressor 14 and the LP turbine rotor 20 - mounted thereto). The turbine exhaust case 25 may therefore support a portion (and, in a particular embodiment, a major portion) of the weight of the low pressure spool, in addition to bearing its own weight and the aerodynamic loads affecting thereon by the exhaust gases.

The bearing housing 33 is disposed radially within the inner case portion 27 of the turbine exhaust structure 25, and is structurally connected, in a manner described in further detail below, to the inner case portion 27 for supporting an aft end of the low pressure shaft 17 of the low pressure spool.

The bearing housing 33 includes a generally cylindrical body defining a central bore 38 therein sized for accommodating therein a bearing of the main engine shaft (e.g. the LP shaft 19). The bearing housing 33 may also include a flange 47 radially extending from the cylindrical body at an axial end thereof, for mounting the bearing housing 33 to other structures of the engine 10.

In a particular embodiment, the bearing housing 33 is integrally formed as a single monolithic structure with a remainder of the turbine exhaust structure 25, including the inner case portion 27 of the turbine exhaust duct 28. The entire turbine exhaust structure 25 may thus be formed as a single monolithic component, whether by additive manufacturing or more conventional manufacturing methods, including machining, casing, molding, etc. In this regard, the entire design of the present turbine exhaust structure 25 is configured such as to be readily adaptable for additive manufacturing technologies. In one possible embodiment, the entire turbine exhaust structure 25 is made of the same material throughout.

An integrated turbine exhaust structure 25, having among other things an integrated bearing compartment within the inner case portion 27, permits the turbine exhaust structure 25 of the present disclosure to be compact, thereby making it suitable for small engine architectures where space between a turbine inner gas path and the bearing compartment is small and thus in situations where previously used turbine exhaust cases, having a mechanical bolted flange arrangement between the exhaust duct and bearing compartment, would not be feasible.

Referring now more specifically to Figures 2-4, the bearing housing 33 of the turbine exhaust structure 25 is disposed radially within the inner case portion 27, both co-axially with the main engine axis 11. The bearing housing 33 is spaced radially inward from an inwardly facing inner wall 35 of the inner case portion 27 by an annular gap 36. A number of structural ribs 40 extend radially between the bearing housing 33 and the inner case portion 27, through the annular gap 36, and more specifically extend between an outer surface 37 of the bearing housing 33 and the inwardly facing inner wall 35 of inner case portion 27. The structural ribs 40 therefore structurally interconnect the bearing housing 33 and the turbine exhaust duct 28, which together form the turbine exhaust case 25. The structural ribs 40 are load bearing, and help to transmit load between the two structures they interconnect. The ribs 40 may be circumferentially equally spaced apart about the bearing housing 33, such as to permit a substantially equal load distribution.

Additionally, in a particular embodiment, one or more bearing support legs 42 may also be provided to help support the bearing housing 33 within the inner case portion 27 of the turbine exhaust duct 28 and thus help bear the load of the engine spool supported by the bearing within the bearing housing 33. The bearing support leg(s) 42 may extend radially between the body of the bearing housing 33 and the inner wall 35 of the inner case portion 27. In the depicted embodiment, at least one main bearing support leg 42 is circumferentially disposed at a bottom point within between the bearing housing 33 and the inner case portion 27. Two, three or more support legs 42 may alternately also be provided.

The bearing housing 33 receives therein a main shaft bearing at the aft end of the engine 10, which in turn supports the aft end of the LP spool for example, and therefore load is transmitted from the bearing housing 33, through the ribs 40 and the support leg(s) 42, to the outer case portion 29 of the turbine exhaust duct 28. A forward-end mounting flange 39 is integrated with the outer case portion 29 of the turbine exhaust duct 28, for securing the turbine exhaust duct 28 and thus the entire turbine exhaust structure 25 to an upstream engine case (e.g. the gas generator case surrounding the combustor section 16 and turbine section 18 of the core of the engine 10).

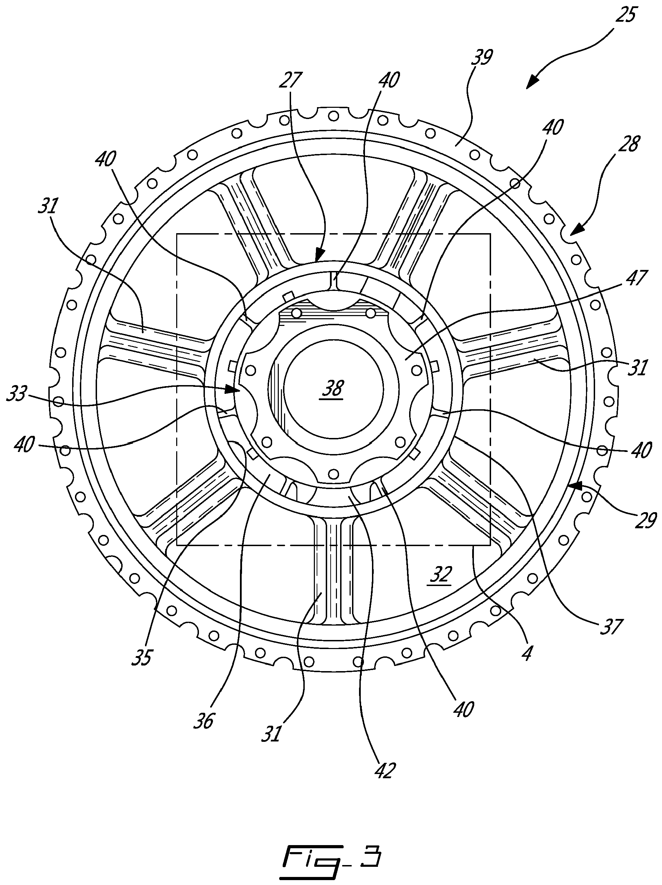

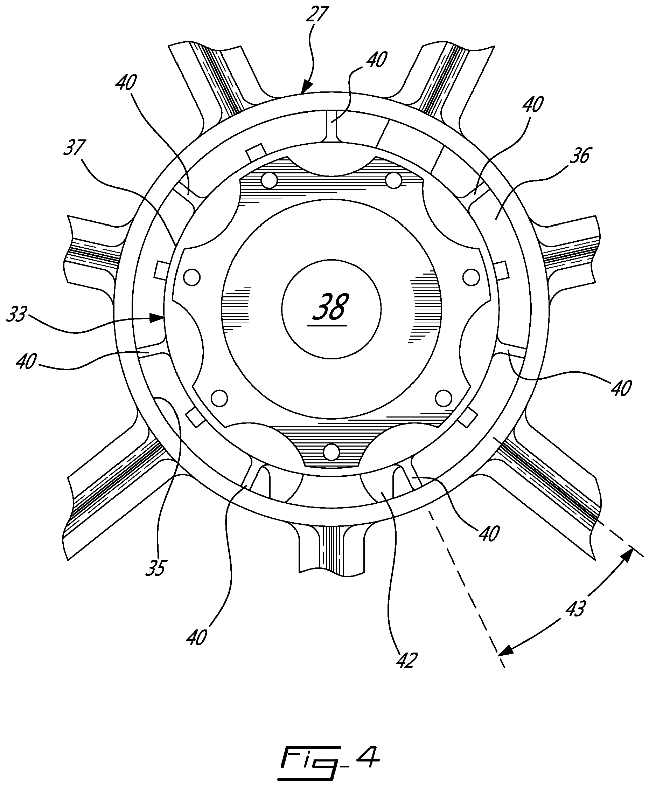

As best seen in Figs. 3 and 4, the ribs 40 and the struts 31 are circumferentially offset with respect to each other. Accordingly, each structural rib 40 is circumferentially spaced apart from, and thus is circumferentially misaligned relative to, each of the airfoil-shaped struts 31 by an arcuate circumferential offset distance 43. While in one particulate embodiment the arcuate circumferential offset distances 43 between each strut 31 and structure rib 40 is equal about the circumference of the inner case portion 27, alternately two or more circumferential offset distances 43 may be provided. In all cases, however, none of the plurality of ribs 40 is circumferentially aligned with a strut 31 (i.e. the circumferential offset distance 43 cannot be zero).

In one particular embodiment, each structural rib 40 is circumferentially disposed between a pair of struts 31 that are circumferentially adjacent thereto, and disposed on either circumferential side of said each structural rib 40. In the depicted embodiment, each rib 40 is disposed circumferentially mid-way between each pair of struts 31. However, it is to be understood that alternate circumferentially offset configurations remain possible. For example, two ribs 40 may be disposed between each pair of struts 31, in which case neither of the ribs 40 would be disposed at the circumferential mid-point between the pair of struts 31. Alternately, some pairs of struts 31 may not have any ribs 40 therebetween, while others may have multiple.

While the number of ribs 40 extending radially between the bearing housing 33 and the inner case portion 27 of the turbine exhaust duct 28 may vary, in at least one embodiment the number of ribs 40 is equal to the number of struts 31 extending radially between the inner case portion 27 and the outer case portion 29 of the turbine exhaust duct 28.

Referring now to Figs. 2, 5 and 6, the radially extending elements of the turbine exhaust case 25, namely the bearing support legs 42, the structural ribs 40 and the airfoil-shaped struts 31 are all substantially axial aligned (i.e. in a fore-aft direction) with each other along a strut axis 50. This may help provide high stiffness to the turbine exhaust case 25 in a relatively compact size envelope. Additionally, this structure permits the integration of features to allow the hot surface elements (e.g. the inner case portion 27, the struts 31, and the outer case portion 29) to expand and/or contract due to thermal changes and thus with some flexibility (in the sense of thermal structure flexibility) to avoid undue thermal stress buildup in the components of the turbine exhaust structure 25.

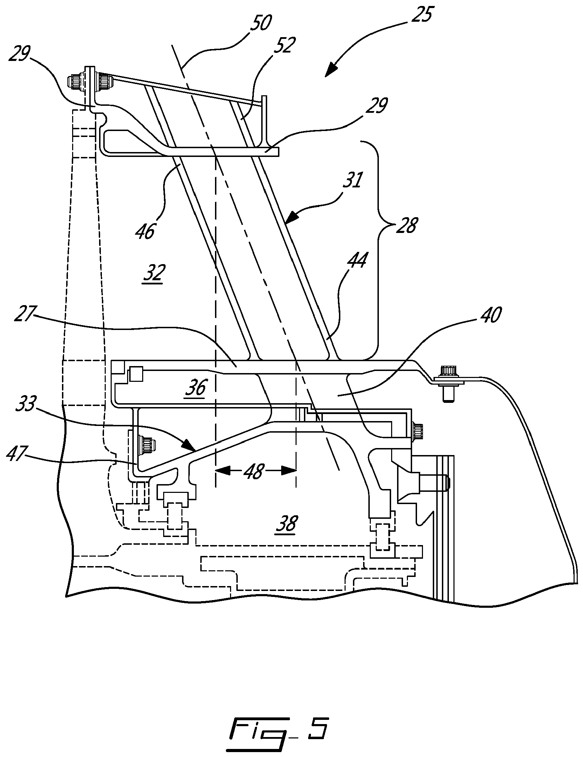

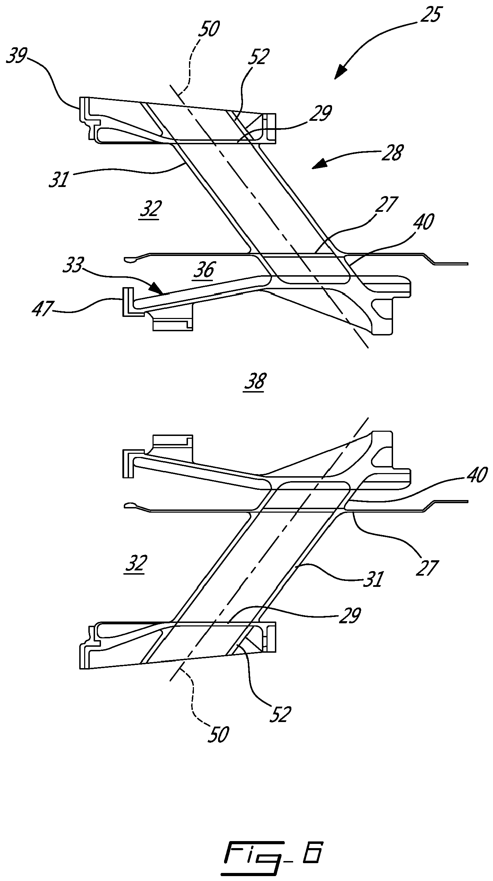

As best seen in Fig. 5 and 6, the hot struts 31 are axially inclined, and therefore the strut axis 50 extending through each strut 31 between a radially inner end 44 and radially outer end 46 thereof is similarly axially inclined. More specifically, in the depicted embodiment, the radially outer ends 46 of the struts 31 are disposed axially forward (i.e. upstream) of the radially inner ends 44, such that the struts 31 extends axially rearwardly (i.e. downstream) as they extend radially inwardly from the outer ends 46 towards the inner ends 44 thereof. Stated differently, the radially inner ends 44 and the radially outer ends 46 of the struts 31 are not axially aligned with each other, and define an axial offset 48 therebetween. The axial inclination of the struts 31 may help enable the turbine exhaust structure 25 to be relatively compact, and more specifically may permit a smaller overall engine diameter.

Additionally, the "hot" struts are axially inclined, such that each of the "hot" struts extends along a strut axis between a radially inner end and a radially outer end of the strut, wherein the radially outer end is upstream (i.e. axially forward) relative to the radially inner end.

As can also be seen in the embodiment of Figs. 5 and 6, the structural ribs 40, which extend radially between the bearing housing 33 and the inner case portion 27 of the turbine exhaust duct 28, are also axially aligned, being co-axial with the inclined strut axis 50 and therefore with the struts 31. As such, the ribs 40 also axially inclined, with the radially outer end of each of the ribs 40 is disposed axially forward of the radially inner end of each of the ribs 40. The structural ribs 40 and the airfoil-shaped struts 31 may also have an axial length, in a direction parallel to the main engine axis 11, that is substantially the same, such that when viewed in the cross-sectional profile view of Figs. 5 and 6 the structure ribs 40 form a continuation of the axially inclined angle and axial length of the struts 31.

Referring still to Figs. 2, 5, and 6, the turbine exhaust structure 25 may also include outer case ribs 52 which are disposed outwardly of the outer case portion 29 of the turbine exhaust duct 28, and extend radially outwardly from the outer surface of the outer case portion 29. While these outer case ribs 52 may not be disposed within the main annular gas path 32, the outer case ribs 52 may nevertheless have a cross-sectional profile that is substantially similar to that of the struts 31 and may therefore also be hollow and airfoil shaped.

As best seen in Fig. 5 and 6, the outer case ribs 52 may also be axially inclined, being aligned with the strut axis 50. Much as per the structure inner ribs 40, the outer case ribs 52 may also have an axial length, in a direction parallel to the main engine axis 11, that is substantially the same as that of the struts 31, such that when viewed in the cross-sectional profile view of Figs. 5 and 6 the outer case ribs 52 form a continuation of the axially inclined angle and axial length of the struts 31 and the inner structural ribs 40.

These structural features of the turbine exhaust structure 25 may accordingly provide a relatively high stiffness structure with high stiffness/weight ratio, and a compact design that can be used with small engines and/or in configurations having tight space constraints. For example, in one particular embodiment of the present turbine exhaust structure 25, a ratio of stiffness to weight (stiffness/weight) is greater than 15000 Ibf/in (pound-force / inch) per 1 lb (pound mass) of material (2627 N/mm per 0.454 kg). This is sometimes referred to as specific stiffness or specific modulus.

The present turbine exhaust structure 25 may permit a compact design compared to known turbine exhaust structures, which may be particularly useful for small engines and/or applications where tight space constraints exist for the engine and/or the turbine exhaust section thereof. The present turbine exhaust structure 25 has a design which may also help save cost and/or weight compared to typical "mid-turbine" frame designs known in the art.

The above description is meant to be exemplary only, and one skilled in the art will recognize that changes may be made to the embodiments described without departing from the scope of the invention disclosed. For example, although a turboshaft engine is shown, the invention may be used with various types of gas turbine engines, including turbofans, turboprops, and turboshafts. Still other modifications which fall within the scope of the present invention will be apparent to those skilled in the art, in light of a review of this disclosure, and such modifications are intended to fall within the appended claims.

## Claims

1. A turbine exhaust structure (25) for a gas turbine engine (10), comprising:
a turbine exhaust duct (28) having annular inner and outer case portions (27, 29) radially spaced apart to define an annular gas path (32) therebetween, a plurality of struts (31) extending between and structurally interconnecting the inner and outer case portions (27, 29), the struts (31) being circumferentially spaced apart about within the annular gas path (32), a strut axis (50) extending through each of the struts (31) between a radially inner end (44) and a radially outer end (46) thereof; and
**characterized in that** the turbine exhaust structure includes
a bearing housing (33) disposed within the inner case portion (27) of the turbine exhaust duct (28), the bearing housing (33) adapted to support a main shaft bearing of the gas turbine engine (10), a plurality of structural ribs (40) extending between the bearing housing (33) and the inner annular case portion (27), the structural ribs (40) configured to structurally interconnect and transfer load between the bearing housing (33) and the inner case portion (27) of the turbine exhaust duct (28), the structural ribs (40) circumferentially spaced from one another and circumferentially offset from the struts (31).

2. The turbine exhaust structure of claim 1, wherein the struts (31) and the strut axes (50) thereof are axially inclined to define an axial offset (48) between the radially inner ends and the radially outer ends of the struts (31).

3. The turbine exhaust structure of claim 2, wherein the radially outer ends (46) of the struts (31) are disposed axially forward of the radially inner ends (44) thereof, and the struts (31) extend axially rearwardly as they extend radially inwardly from the outer ends towards the inner ends thereof, and optionally wherein the structural ribs (40) are axially aligned with the strut axes (50).

4. The turbine exhaust structure of any one of claims 1 to 3, further comprising outer case ribs (52) disposed outwardly of the turbine exhaust duct (28), the outer case ribs (52) being circumferentially spaced apart and extending radially away from the outer case portion (29), the outer case ribs (52) being optionally circumferentially and/or axially aligned with the strut axes (50).

5. The turbine exhaust structure of any one of the preceding claims, wherein the structural ribs (40) extend radially between the bearing housing (33) and the inner annular case portion (27).

6. The turbine exhaust structure of any one of the preceding claims, wherein the structural ribs (40) are equally circumferentially spaced apart.

7. The turbine exhaust structure of any one of the preceding claims, wherein the number of structural ribs (40) is equal to the number of struts (31).

8. The turbine exhaust structure of claims 7, wherein one of the structural ribs (40) is disposed circumferentially between each pair of the struts (31), and optionally wherein said one of the structural ribs (40) is disposed a circumferential mid-point between each said pair of the struts (31).

9. The turbine exhaust structure of any one of the preceding claims, wherein the struts (31) have a cross-sectional perimeter that is airfoil-shaped.

10. The turbine exhaust structure of any one of the preceding claims, wherein the turbine exhaust structure (25) has stiffness to weight ratio of greater than 15000 Ibf/in per 1 lb (2627 N/mm per 0.454 kg) of material.

11. The turbine exhaust structure of any one of the preceding claims, wherein the bearing housing (33) and the turbine exhaust duct (28) are integrally formed as a single monolithic component, the turbine exhaust structure being optionally composed of a single material throughout, the single material being an additive manufactured material.

12. A method of fabricating a turbine exhaust structure (25) of a gas turbine engine (10), the method comprising:
integrally forming a turbine exhaust duct (28) and a bearing housing (33) as a single monolithic component, the turbine exhaust duct having annular inner and outer case portions (27, 29) and a plurality of struts (31) extending between and structurally interconnecting the inner and outer case portions, the struts (31) circumferentially spaced from one another and each defining a strut axis (50) extending therethrough between a radially inner end (44) and a radially outer end (46) of the struts (31), the bearing housing (33) disposed within the inner case portion (27) of the turbine exhaust duct (28); and
forming a plurality of structural ribs (40) integrally with the bearing housing (33) and the turbine exhaust duct (28), the structural ribs (40) extending radially between the bearing housing (33) and the inner case portion (27), the structural ribs (40) being circumferentially spaced apart from each other, the structural ribs (40) being axially aligned with the struts (31) of the turbine exhaust duct (28).

13. The method of claim 12, further comprising forming the struts and the structural ribs to be axially inclined, such that each of the struts (31) and the structural ribs (40) define an axial offset (48) between radially inner ends (44) and radial outer ends (46) thereof.

14. The method of claim 12 or 13, further comprising circumferentially offsetting the structural ribs (40) from the struts (31).

15. The method of claim 14, further comprising providing a common number of each of the struts (31) and the structural ribs (40).
